# FASCICULE DE BREVET EUROPEEN

(11) **EP 1 568 157 B1**
(45) Date de publication et mention de la délivrance du brevet: **15.08.2007**
(21) Numéro de dépôt: 03786032.7
(22) Date de dépôt: 20.11.2003
(51) Int. Cl.: H04B 10/10, H05B 33/08

(54) **DISPOSITIF D' ECLAIRAGE A DIODES ELECTROLUMINESCENTES COMPORTANT UN DISPOSITIF DE COMMUNICATION ET INSTALLATION COMPORTANT UN TEL DISPOSITIF**
BELEUCHTUNGSVORRICHTUNG MIT LICHTEMITTIERENDEN DIODEN (LED) UND EIN KOMMUNIKATIONSGERÄT UND ANORDNUNG MIT EINER SOLCHEN VORRICHTUNG
ELECTROLUMINESCENT DIODE LIGHTING DEVICE COMPRISING A COMMUNICATION DEVICE AND INSTALLATION COMPRISING ONE SUCH DEVICE

(30) Priorité: 05.12.2002 FR 0215359
(43) Date de publication de la demande: 31.08.2005
(73) Titulaire: SCHNEIDER ELECTRIC INDUSTRIES SAS, 92500 Rueil-Malmaison (FR)
(72) Inventeur: Lovato, Jean-Louis, 38330 Biviers (FR); MINIER, Vincent, F-38640 Claix (FR); COLLOMB, vIRGINIE, . (FR); MOUSSANET, Roland, F-38240 Notre Dame de Commiers (FR); BARRAULT, Michel, F-38710 Mens (FR)
(74) Mandataire: Tripodi, Paul
(86) Numéro de dépôt international: PCT/FR2003/003433
(87) Numéro de publication internationale: WO 2004/062141

(56) Documents cités:
- EP-A- 0 921 515
- WO-A-01/35552
- US-A- 4 516 221
- US-A- 5 995 253
- US-A- 6 084 250
- US-A1- 2002 047 624
- US-A1- 2002 048 177
- US-A1- 2002 167 701

## Description

### DOMAINE TECHNIQUE

L'invention concerne un dispositif d'éclairage comportant au moins un émetteur de lumière à diode électroluminescente destinée à émettre de la lumière blanche en produisant un rayonnement initial et un rayonnement secondaire résultant de l'excitation d'au moins une couche de matériau réagissant audit rayonnement initial, des moyens électroniques de commande connectés audit au moins un émetteur de lumière à diode électroluminescente pour contrôler l'éclairage, et au moins des premiers moyens de communication connectés audits moyens de commande. L'invention concerne aussi une installation d'éclairage comportant une ligne d'alimentation électrique pour alimenter au moins un tel dispositif.

### ETAT DE LA TECHNIQUE

Des dispositifs d'éclairage connus comportant un dispositif de communication utilisent des diodes électroluminescentes pour émettre des signaux lumineux de communication.

De tels dispositifs sont décrits notamment dans la demande de brevet US2002/0048177. Ces dispositifs sont utilisés avec des dispositifs de visualisation ou de signalisation d'information en association avec des récepteurs de types sonores ou visuels.

Cependant, les dispositifs connus ne peuvent pas être appliqués pour de l'éclairage de bonne qualité. En effet, ces dispositifs d'éclairage à diodes de couleur ne permettent pas d'avoir un bon rendu de couleur. De plus, la superposition de signaux de communication risque d'altérer la qualité de la lumière et de rendre visible des changements de couleur et d'intensité.

Dans les dispositifs d'éclairage à diodes électroluminescentes émettant de la lumière blanche, les diodes émettent un premier rayonnement lumineux dont la couleur est vers les bleus ou l'ultraviolet. Le premier rayonnement excite notamment une couche de phosphores ou autres matériaux fluorescents qui émet un second rayonnement dans des couleurs de longueurs d'onde plus haute dans le visible, par exemple, vers le jaune ou le vert. Ainsi, le mélange du premier et du second rayonnement donne une lumière blanche de bonne qualité pour être utilisée en éclairage.

Cependant, la commande de diodes électroluminescentes émettant de la lumière blanche pour émettre des signaux de communication en même temps que de la lumière pour l'éclairage pose des problèmes de qualité de lumière et de vitesse de transmission. En effet, la fluorescence des phosphores a un temps de réponse trop élevée pour permettre des émissions de signaux supérieures à 1 méga bits par seconde. De plus, même avec des vitesses inférieures, une modulation du premier rayonnement modifie la couleur blanche résultante du mélange des premiers et seconds rayonnements.

### EXPOSE DE L'INVENTION

L'invention a pour but un dispositif d'éclairage comportant un dispositif de communication permettant une vitesse de transmission élevée et/ou une émission de lumière blanche de bonne qualité, ainsi qu'une installation équipée d'un tel dispositif.

Dans un dispositif selon l'invention, les moyens électroniques de commande commandent l'alimentation d'au moins un émetteur de lumière à diode électroluminescente pour émettre un signal lumineux de modulation dudit rayonnement initial en fonction d'un signal de communication fourni par les premiers moyens de communication , ledit signal lumineux de modulation étant destiné à être reçu par des moyens de réception de signal lumineux sensibles au rayonnement initial.

Dans un mode de réalisation préférentiel, le dispositif d'éclairage comporte des moyens de réception comportant un capteur sensible au rayonnement initial connecté à des moyens de traitement de signaux de réception.

Avantageusement, les moyens de réception comportent des moyens de filtrage optiques pour laisser passer un signal lumineux correspondant à un rayonnement initial et rejeter un rayonnement secondaire.

De préférence, les moyens de réception comportent des moyens de filtrage électronique pour réduire ou supprimer une composante continue d'un signal représentatif d'un signal optique reçu par les moyens de réception.

De préférence, les moyens électroniques de commande commandent l'alimentation d'au moins un émetteur de lumière à diode électroluminescente pour émettre un signal lumineux modulé dudit rayonnement initial en superposant une composante continue et un signal de modulation représentatif d'un signal de communication.

Avantageusement, la composante continue dépend d'une valeur représentative du signal de communication.

Avantageusement, l'amplitude du signal de modulation dépend d'une valeur représentative du signal de communication.

Avantageusement, les moyens électroniques de commande comportent des moyens de compensation pour compenser des dérives de couleur d'éclairage.

Dans un mode de réalisation particulier, le dispositif d'éclairage comporte au moins un émetteur de lumière rouge à diode électroluminescente et/ou au moins un émetteur de lumière bleue à diode électroluminescente commandés par les moyens électroniques de commande.

De préférence, les moyens électroniques de commande comportent des moyens pour contrôler la température de couleur de la lumière.

Avantageusement, le dispositif d'éclairage comporte au moins un capteur de lumière connecté aux moyens de commande pour réguler l'intensité lumineuse, l'indice de rendu de couleur et/ou la température de couleur d'une lumière destinée à l'éclairage.

Avantageusement, le dispositif d'éclairage comporte au moins un capteur de courant pour fournir aux moyens de commande un signal représentatif d'un courant circulant dans au moins un émetteur et pour réguler un courant à fournir audit émetteur.

Une installation d'éclairage selon un mode de réalisation de l'invention comporte une ligne d'alimentation électrique pour alimenter au moins un dispositif d'éclairage tel que défini ci-dessus et au moins un appareil électrique connecté à un récepteur comportant un capteur sensible au rayonnement initial.

Avantageusement, ledit récepteur est intégré dans ledit au moins appareil électrique.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un spectre de lumière pouvant être émis par un émetteur à diode électroluminescente blanche ;
- la figure 2 représente un exemple de signaux de communication ;
- la figure 3 illustre l'allure de l'intensité lumineuse d'un premier et d'un second rayonnement commandé par un signal représentatif d'un signal de communication ;
- la figure 4 représente un dispositif d'éclairage selon un mode de réalisation l'invention ;
- les figures 5A, 5B, et 5C représentent des signaux dans un dispositif d'éclairage selon un mode de réalisation de l'invention sans compensation ;
- les figures 6A, 6B, et 6C représentent des signaux dans un dispositif d'éclairage selon un mode de réalisation de l'invention avec compensation ;
- la figure 7 représente un dispositif d'éclairage selon un mode de réalisation de l'invention comportant aussi des diodes émettant des lumières de couleurs ;
- la figure 8 représente un schéma d'un circuit de commande d'un dispositif d'éclairage selon un mode de réalisation l'invention ;
- la figure 9 représente un schéma de modélisation des fonctions d'une diode émettant de la lumière blanche ;
- la figure 10 représente un premier schéma de compensation d'un dispositif d'éclairage selon un mode de réalisation de l'invention ;
- la figure 11 représente un second schéma de compensation d'un dispositif d'éclairage selon un mode de réalisation de l'invention ;
- la figure 12 représente un schéma de régulation d'un dispositif d'éclairage selon un mode de réalisation de l'invention ;
- la figure 13 représente une installation comportant un appareil et un dispositif selon un mode de réalisation de l' invention ;
- la figure 14 représente des signaux pouvant être émis par un dispositif selon un mode de réalisation de l'invention.

### DESCRIPTION DETAILLEE DE MODES DE REALISATION PREFERES

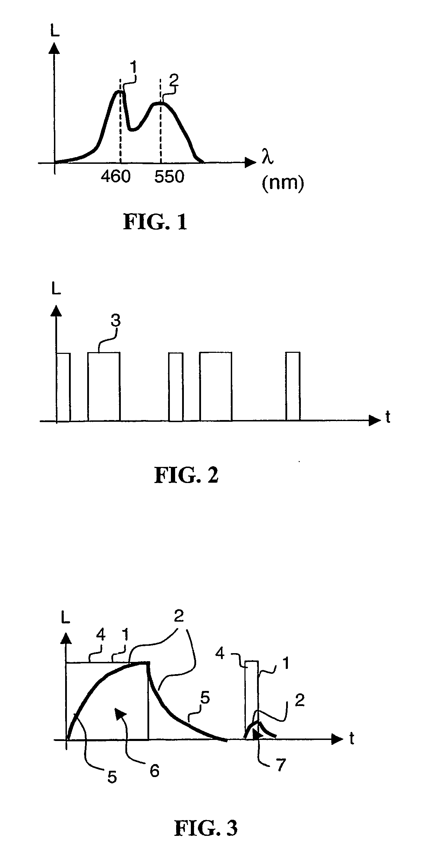

La figure 1 montre un spectre de lumière pouvant être émis par une diode électroluminescente à lumière blanche utilisable dans un dispositif selon l'invention. Dans une telle diode, un premier rayonnement est émis dans le bleu ou l'ultraviolet par exemple centré sur une longueur d'onde de 460 nanomètres. Un second rayonnement est ré émis par une couche fluorescente notamment en phosphore excitée par le premier rayonnement. Le second rayonnement est, par exemple, dans les verts ou les jaunes, par exemple centré sur 550 nanomètres. Le mélange de ces deux rayonnements produisant une lumière blanche utilisable pour l'éclairage.

La figure 2 montre un exemple de trame de signaux de communication pouvant moduler un premier rayonnement émis par les diodes électroluminescentes blanches. Le premier rayonnement 1 a un temps de réponse rapide est permet de transmettre des données à grand débit.

Sur la figure 3, un premier rayonnement 1 représentée par une courbe 4 a une réponse rapide et un second rayonnement représenté par une courbe 5 suit le second rayonnement avec une réponse plus lente. Si un signal de communication 3 varie peu comme dans une première partie 6 de la figure 3, le second rayonnement 2 peut atteindre une valeur suffisante et ne pas trop altérer la lumière blanche. Dans le cas où la variation est rapide, comme dans une seconde partie 7 des courbes de la figure 3, le premier rayonnement a sa valeur maximale mais le second rayonnement ne peut pas atteindre sa valeur normale d'éclairement. Dans la partie 7, la luminosité du dispositif diminue et le rendu de couleur devient mauvais puisqu'une composante de la lumière blanche diminue fortement. D'autre part, la réaction lente du second rayonnement risque de perturber des capteurs de rayonnement destinés à recevoir des signaux optiques de communication.

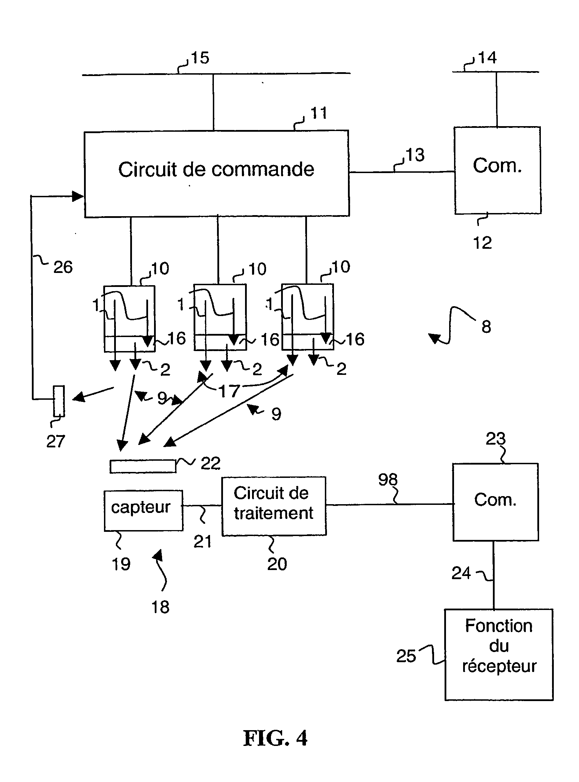

Dans un dispositif d'éclairage 8 selon un mode de réalisation de l'invention représenté sur la figure 4, des émetteurs de lumière 10 à diode électroluminescente destiné à émettre de la lumière blanche 9 sont connectés à un circuit électronique de commande 11. Un circuit de communication 12 est connecté au circuit de commande pour fournir des signaux 13 de communication et à une ligne de communication 14 pour recevoir des signaux à transmettre. Le circuit électronique de commande 11 est connecté à une ligne d'alimentation 15 pour recevoir une énergie électrique. Lorsqu'ils sont alimentés par le circuit de commande, les émetteurs de lumière 10 produisent un rayonnement initial 1 et un rayonnement secondaire 2 résultant de l'excitation d'au moins une couche 16 de matériau réagissant audit rayonnement initial. Ainsi, le circuit de commande contrôle l'éclairage et commande l'alimentation des émetteurs 10 de lumière à diode électroluminescente pour émettre un signal lumineux 17 de modulation dudit rayonnement initial 1 en fonction d'un signal de communication 13 fourni par les premiers moyens de communication 12. Ledit signal lumineux 17 de modulation est destiné à être reçu par un récepteur 18 de signal lumineux sensible au rayonnement initial 1.

Le récepteur 18 comporte un capteur 19 sensible au rayonnement initial connecté à un circuit de traitement 20 pour traiter des signaux de réception 21. Un filtre optique 22 est disposé devant le capteur 19 pour laisser passer un signal lumineux correspondant à un rayonnement initial 1 et rejeter un rayonnement secondaire 2.

Avantageusement, le circuit de traitement 20 comporte un filtre électronique 28 pour réduire ou supprimer une composante continue d'un signal représentatif d'un signal optique reçu par le capteur 19 de réception. Un signal 98 de sortie du circuit de traitement est fourni à un circuit de communication 23 du récepteur qui fournit à son tour des signaux 24 utilisables par un module 25 de fonctions du récepteur.

Le circuit de commande 11 comporte de préférence une entrée pour recevoir des signaux 26 fournis par un capteur de lumière 27. Ainsi, le circuit 11 peut réguler de manière dynamique l'intensité lumineuse, le rendu de couleur et la température de couleur en fonction de la lumière reçue par le capteur. Un tel asservissement permet de prendre en compte la lumière produite mais aussi la lumière ambiante qui peut exister dans une pièce éclairée. Ce capteur peut être de type photodiode ou capteur de couleurs. Dans ce cas, le signal 26 comportera trois signaux représentatifs de trois couleurs, par exemple rouge, vert et bleu.

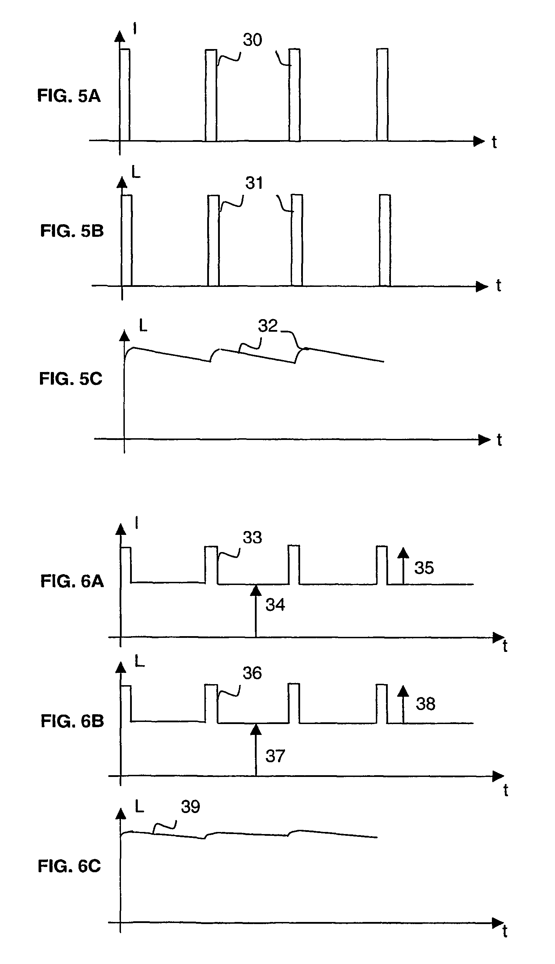

Les figures 5A à 5C montrent des signaux dans un dispositif non compensé. Une courbe 30 de la figure 5A illustre un signal de communication 13, une courbe 31 de la figure 5B illustre un signal optique produit par le rayonnement initial 1 et une courbe 32 illustre l'allure d'un rayonnement secondaire 2. Le rayonnement initial 1 sera reçu et utilisé pour la communication. Le rayonnement secondaire est utilisé en combinaison avec le rayonnement initial pour produire de la lumière blanche. Dans le cas des figures 5A à 5C, la communication se fait rapidement mais le rendu de couleur peut être encore perturbé.

Dans un mode de réalisation avantageux, le circuit de commande 11 commande les émetteurs 10 de lumière à diode électroluminescente pour émettre un signal lumineux dudit rayonnement initial en superposant une composante continue et un signal de modulation représentatif d'un signal de communication.

Les figures 6A à 6C montrent des signaux dans un dispositif compensé. Une courbe 33 de la figure 6A illustre un signal de communication ou de commande 13 comportant une composante continue 34 et une partie modulée 35, une courbe 36 de la figure 6B illustre un signal optique produit par le rayonnement initial 1 avec une partie 37 continue et une partie variable 38, et une courbe 39 illustre l'allure d'un rayonnement secondaire 2. Le rayonnement secondaire est beaucoup moins perturbé et la régulation peut se faire plus facilement en faisant varier la valeur de la composante continue 34 ou 37. Ainsi, la luminosité, le rendu de couleur et la température de couleur sont très stables et peu dépendants du signal de communication.

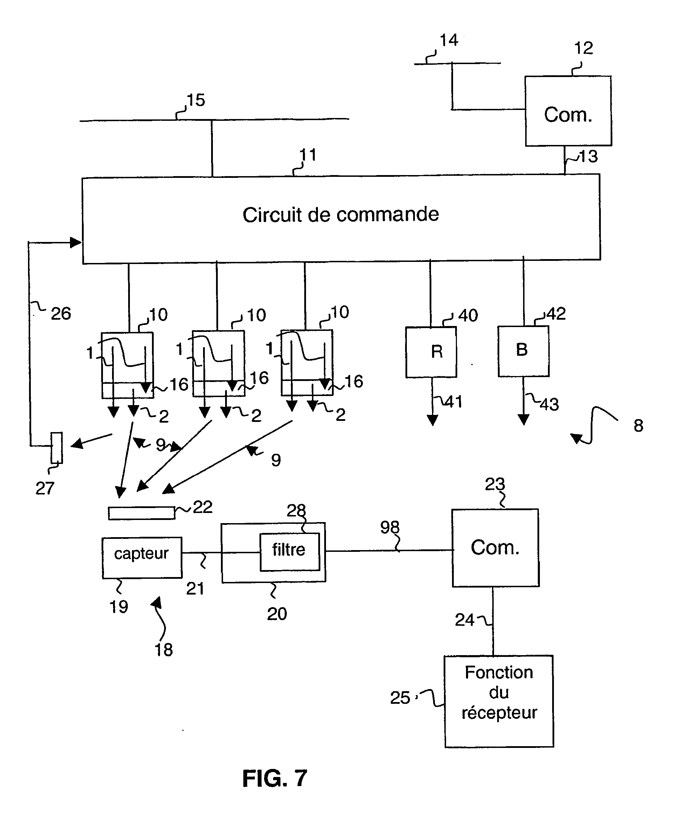

Pour améliorer le contrôle du rendu de couleur et de la température de couleur, un dispositif selon un mode de réalisation de l'invention, représenté sur la figure 7, comporte des émetteurs 40 de lumière rouge 41 à diodes électroluminescentes et des émetteurs 42 de lumière bleue 43 à diodes électroluminescentes commandés par le circuit de commande 11.

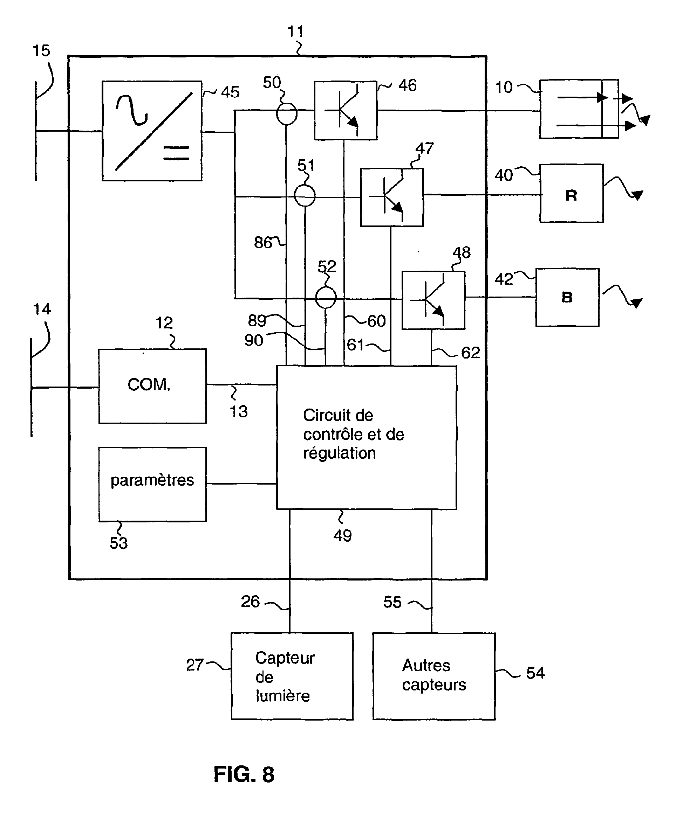

La figure 8 représente un schéma bloc d'un circuit de commande 11. Sur ce schéma, un circuit d'alimentation connecté à la ligne 15 alimente les émetteurs de lumière 10, 40, et 42 à travers des circuits électroniques de puissance respectivement 46, 47, et 48.

Un circuit de contrôle de régulation 49 reçoit des signaux de 13 de communication et commande les circuits électroniques de puissance en fonction de valeurs représentatives desdits signaux. Des capteurs de courants 50, 51, et 52 fournissent au circuit 49 des signaux représentatifs de courants circulant dans les émetteurs de lumière respectivement 10, 40, et 42. Le contrôle et la régulation sont, de préférence, effectués en fonction de paramètres 53 fournis au circuit 49. Par exemple les paramètres peuvent être enregistrés dans un circuit de mémoire.

Un capteur 27 de lumière est connecté au circuit 49 pour permettre une régulation efficace de l'intensité lumineuse, de l'indice de rendu de couleur et/ou de la température de couleur. D'autres capteurs 54 peuvent fournir des signaux contrôle 55 au circuit 49. Par exemple, le capteur 54 peut être un détecteur de présence permettant de déclencher l'allumage ou l'extinction en fonction de la présence d'une personne dans une zone de détection. La disposition du capteur peut dépendre de l'utilisation, par exemple le capteur peut être disposé à proximité du dispositif d'éclairage ou déporté dans un endroit plus approprié. Le capteur peut aussi être disposé sur une table de travail ou un bureau. Il sera alors avantageusement relié au dispositif de commande par une liaison sans fils, notamment par liaison radio ou infrarouge.

Ainsi, des signaux de commande 60, 61 et 62 appliqués par le circuit 49 aux circuits électroniques de puissance respectivement 46, 47, et 48 peuvent dépendre de plusieurs signaux ou événements.

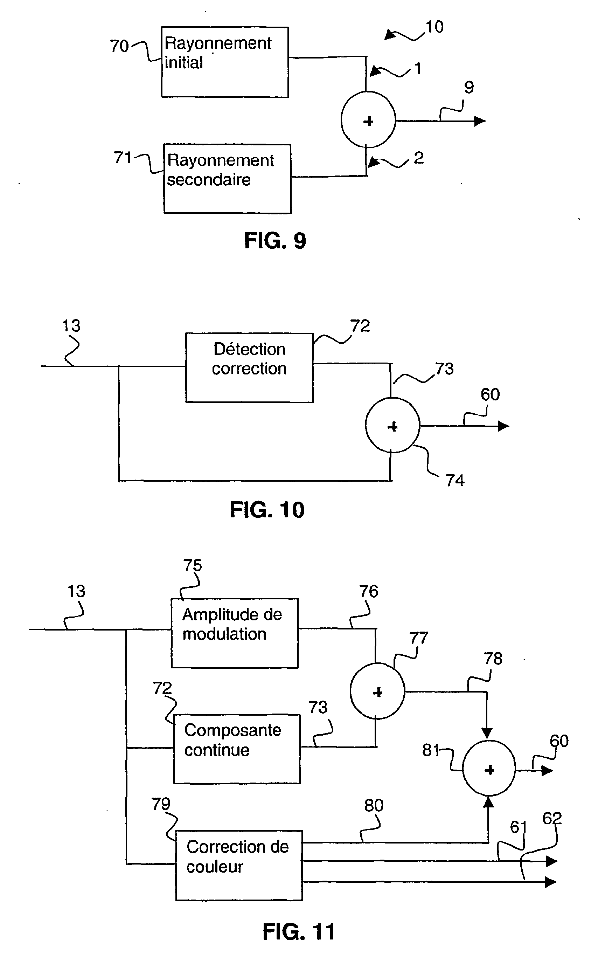

Le schéma de la figure 9 montre une modélisation fonctionnelle d'une diode électroluminescente émettant de la lumière blanche. Un bloc 70 représente le générateur de rayonnement initial 1 sortant de l'émetteur optique et un bloc 71 représente un générateur de rayonnement secondaire 2 produit par une couche fluorescente de phosphores. La lumière blanche résultante 9 est la combinaison des rayonnements 1 et 2.

Dans un dispositif à compensation, la valeur de la composante continue est ajustée pour garder des caractéristiques lumineuses sensiblement constantes. La figure 10 montre un système de régulation permettant de fournir un signal de commande 60 à des émetteurs de lumière blanche asservi à un signal 13 représentatif d'un signal de communication. Ainsi, un module 72 de détection et de correction reçoit le signal 13 et fournit un signal 73 de composante continue à un opérateur 74. Ledit opérateur 74 combine le signal 13 et le signal 73 pour fournir le signal 60 de commande du circuit 46. La composante continue 73 peut être déterminée notamment en fonction de la valeur moyenne, de la valeur efficace, de la fréquence et/ou du rapport cyclique du signal 13.

Dans un système de régulation représenté sur la figure 11, un module 72 opère la correction de la composante continue en fournissant un signal 73 et un module 75 recevant le signal 13 opère la correction de l'amplitude du signal variable en fournissant un signal de modulation 76 dont l'amplitude varie en fonction du signal d'entrée 13. Les signaux 73 et 76 sont appliqués à un opérateur 77 qui fournit un signal 78 comportant une composante continue et un signal variable de communication corrigés en fonction du signal d'entrée 13.

Le signal 78 peut être appliqué au circuit 46 en tant que signal de commande 60. Cependant, La correction peut être complétée par un module 79 de correction de couleur recevant le signal 13 et fournissant un signal 80 pour corriger le rendu de couleur et/ou la température de couleur. Le signal 80 et combiné au signal 78 dans un opérateur 81 pour fournir le signal de commande 60. Le module 79 peut aussi commander les diodes de lumière bleue ou rouge en fournissant des signaux de commande 61 et 62.

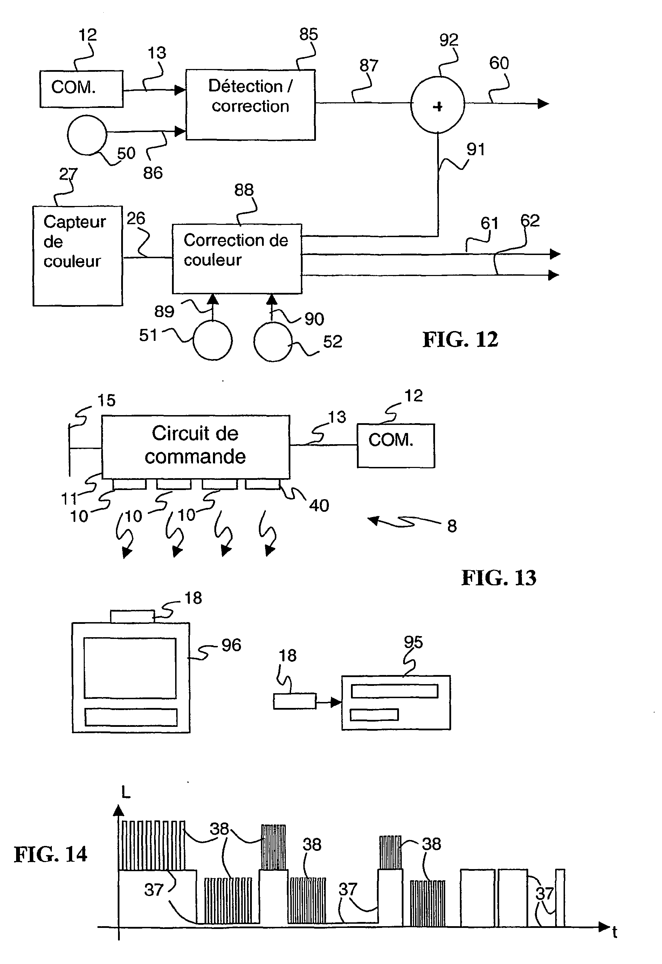

La figure 12 montre un système de régulation effectuant aussi une régulation en fonction de courants circulant dans les émetteurs de lumière. Ainsi, un module de régulation 85 reçoit un signal 13 de communication et un signal 86 représentatif d'un courant circulant dans des diodes électroluminescentes à lumière blanche fourni par le capteur 50. Le module 85 effectue la régulation et fournit un signal 87 comportant une composante continue et une partie variable dépendantes du signal 13 et du signal de courant 86. Un module 88 de correction de couleur reçoit un signal 26 depuis un capteur 27 de lumière ou de couleur, et des signaux 89 et 90 fournis par les capteurs de courant respectivement 51 et 52. Le module 88 effectue la correction de couleur en fonction des signaux 26, 89 et 90 et fournit un signal 91 de correction pour corriger la commande des émetteurs de lumière blanche et des signaux 61 et 62 pour commander les émetteurs de lumière rouge et bleue. Un opérateur 92 combine les signaux 87 et 91 pour fournir un signal 60 de commande des émetteurs de lumière blanche. Avantageusement, un tel dispositif permet une compensation très efficace de l'intensité lumineuse, de l'indice de rendu de couleur et de la température de couleur.

La figure 13 montre une installation comportant un dispositif d'éclairage 8 selon un mode de réalisation de l'invention connecté à une ligne 15 d'alimentation électrique et un appareil électrique 95 connecté à un récepteur 18 comportant un capteur sensible au rayonnement initial 1. Ledit récepteur 18 peut aussi être intégrés dans un récepteur 96 pour recevoir des signaux lumineux de communication. Les appareils électriques peuvent être notamment des ordinateurs, des appareils multimédias, des appareils portatifs en particuliers vidéo ou sonores.

La figure 14 montrent des signaux pouvant aussi être utilisés dans des dispositifs d'éclairage où la variation et le réglage de la luminosité sont faits par modulation de largeur d'impulsion ou par variation de cycle d'allumage des diodes. Ainsi, la composante continue 37 peut être modulée à basse fréquence pour contrôler l'intensité de l'éclairage et la composante 38 variable représentative du signal de communication à émettre par rayonnement est superposée au signal 37.

Dans les dispositifs décrits ci-dessus, les émetteurs de lumières sont représentés en éclairage direct. Cependant, ils peuvent comporter avantageusement un dispositif optique de répartition, de diffusion et/ou de mélange de lumière ou de couleur pour améliorer la qualité de la lumière. De plus, les émetteurs de lumière peuvent être nombreux et disposés sous forme de matrice et/ou être constitués par des émetteurs de forte puissance disposés en périphérie d'un dispositif de répartition.

## Revendications

1. Dispositif d'éclairage comportant
- au moins un émetteur (10) de lumière à diode électroluminescente destinée à émettre de la lumière blanche (9) en produisant un rayonnement initial (1) et un rayonnement secondaire (2) résultant de l'excitation d'au moins une couche (16) de matériau réagissant audit rayonnement initial (1),
- des moyens électroniques de commande (11) connectés audit au moins un émetteur (10) de lumière à diode électroluminescente pour contrôler l'éclairage, et
- au moins des premiers moyens de communication (12) connectés audits moyens de commande,
dispositif **caractérisé en ce que** les moyens électroniques de commande commandent l'alimentation d'au moins un émetteur de lumière à diode électroluminescente pour émettre un signal lumineux (3, 4, 31, 36) de modulation dudit rayonnement initial en fonction d'un signal de communication (13) fourni par les premiers moyens de communication (12), ledit signal lumineux de modulation étant destiné à être reçu par des moyens de réception (18) de signal lumineux sensibles au rayonnement initial (1).

2. Dispositif d'éclairage selon la revendication 1, **caractérisé en ce qu'**il comporte des moyens de réception (18) comportant un capteur (19) sensible au rayonnement initial (1) connecté à des moyens de traitement (20) de signaux de réception.

3. Dispositif d'éclairage selon la revendication 2, **caractérisé en ce que** les moyens de réception (18) comportent des moyens de filtrage optiques (22) pour laisser passer un signal lumineux correspondant à un rayonnement initial (1) et rejeter un rayonnement secondaire (2).

4. Dispositif d'éclairage selon l'une des revendications 2 ou 3, **caractérisé en ce que** les moyens de réception (18) comportent des moyens de filtrage électronique (28) pour réduire ou supprimer une composante continue d'un signal (21) représentatif d'un signal optique reçu par les moyens de réception.

5. Dispositif d'éclairage selon l'une quelconque des revendications 1 à 4, **caractérisé en ce que** les moyens électroniques de commande (11) commandent l'alimentation d'au moins un émetteur (10) de lumière à diode électroluminescente pour émettre un signal lumineux modulé (36) dudit rayonnement initial (1) en superposant une composante continue (37, 73) et un signal de modulation (36, 76) représentatif d'un signal de communication (13).

6. Dispositif d'éclairage selon la revendication 5 **caractérisé en ce que** la composante continue (73) dépend d'une valeur représentative du signal de communication (13).

7. Dispositif d'éclairage selon des revendications 5 ou 6 **caractérisé en ce que** l'amplitude du signal de modulation (73) dépend d'une valeur représentative du signal de communication (13).

8. Dispositif d'éclairage selon l'une quelconque des revendications 7 à 9, **caractérisé en ce que** les moyens électroniques de commande (11) comportent des moyens de compensation (72, 79, 88) pour compenser des dérives de couleur d'éclairage.

9. Dispositif d'éclairage selon l'une quelconque des revendications 1 à 8, **caractérisé en ce qu'**il comporte au moins un émetteur (40) de lumière rouge à diode électroluminescente et/ou au moins un émetteur (42) de lumière bleue à diode électroluminescente commandés par les moyens électroniques de commande (11).

10. Dispositif d'éclairage selon l'une quelconque des revendications 1 à 9, **caractérisé en ce que** les moyens électroniques de commande (11) comportent des moyens (79, 88) pour contrôler la température de couleur de la lumière.

11. Dispositif d'éclairage selon l'une quelconque des revendications 1 à 10 **caractérisé en ce qu'**il comporte au moins un capteur de lumière (27) connecté aux moyens de commande (11) pour réguler l'intensité lumineuse, l'indice de rendu de couleur et/ou la température de couleur d'une lumière destinée à l'éclairage.

12. Dispositif d'éclairage selon l'une quelconque des revendications 1 à 11 **caractérisé en ce qu'**il comporte au moins un capteur de courant (50, 51, 52) pour fournir aux moyens de commande un signal représentatif d'un courant (86, 89, 90) circulant dans au moins un émetteur (11) et pour réguler un courant à fournir audit émetteur.

13. Installation d'éclairage comportant une ligne d'alimentation électrique (15) pour alimenter au moins un dispositif d'éclairage **caractérisée en ce qu'**elle comporte au moins un dispositif d'éclairage (8) selon l'une quelconque des revendications 1 à 12 et au moins un appareil électrique (95, 96) connecté à un récepteur (1.8) comportant un capteur (19) sensible au rayonnement initial (1).

14. Installation d'éclairage selon la revendication 13 **caractérisé en ce que** ledit récepteur (18) est intégré dans ledit au moins appareil électrique (95).

## Claims

1. Lighting device comprising
- at least one light-emitting diode light emitter (10) designed to emit white light (9) by producing an initial radiation (1) and a secondary radiation (2) resulting from excitation of at least one layer (16) of material reacting to said initial radiation (1),
- electronic control means (11) connected to said at least one light-emitting diode light emitter (10) to control the lighting, and
- at least first communication means (12) connected to said control means,
device **characterized in that** the electronic control means control power supply of at least one light-emitting diode light emitter to emit a modulating light signal (3, 4, 31, 36) of said initial radiation according to a communication signal (13) supplied by the first communication means (12), said modulating light signal being designed to be received by light signal receiver means (18) sensitive to the initial radiation (1).

2. Lighting device according to claim 1, **characterized in that** it comprises receiver means (18) comprising a sensor (19) sensitive to the initial radiation (1) connected to receipt signal processing means (20).

3. Lighting device according to claim 2, **characterized in that** the receiver means (18) comprise optical filtering means (22) to let a light signal corresponding to an initial radiation (1) pass and to reject a secondary radiation (2).

4. Lighting device according to one of the claims 2 or 3, **characterized in that** the receiver means (18) comprise electronic filtering means (28) to reduce or eliminate a DC component of a signal (21) representative of an optical signal received by the receiver means.

5. Lighting device according to any one of the claims 1 to 4, **characterized in that** the electronic control means (11) control power supply of at least one light-emitting diode light emitter (10) to emit a modulated light signal (36) of said initial radiation (1) by superposing a DC component (37, 73) and a modulation signal (36, 76) representative of a communication signal (13).

6. Lighting device according to claim 5, **characterized in that** the DC component (73) depends on a value representative of the communication signal (13).

7. Lighting device according to one of the claims 5 or 6, **characterized in that** the amplitude of the modulation signal (73) depends on a value representative of the communication signal (13).

8. Lighting device according to any one of the claims 7 to 9, **characterized in that** the electronic control means (11) comprise compensation means (72, 79, 88) to compensate lighting colour drifts.

9. Lighting device according to any one of the claims 1 to 8, **characterized in that** it comprises at least one red light-emitting diode light emitter (40) and/or at least one blue light-emitting diode light emitter (42) controlled by the electronic control means (11).

10. Lighting device according to any one of the claims 1 to 9, **characterized in that** the electronic control means (11) comprise means (79, 88) for controlling the colour temperature of the light.

11. Lighting device according to any one of the claims 1 to 10, **characterized in that** it comprises at least one light sensor (27) connected to the control means (11) to regulate the light intensity, the colour rendering index and/or the colour temperature of a light intended for lighting.

12. Lighting device according to any one of the claims 1 to 11, **characterized in that** it comprises at least one current sensor (50, 51, 52) to supply to the control means a signal representative of a current (86, 89, 90) flowing in at least one emitter (11) and to regulate a current to be supplied to said emitter.

13. Lighting installation comprising an electric power supply line (15) to supply at least one lighting device, **characterized in that** comprises at least one lighting device (8) according to any one of the claims 1 to 12 and at least one electrical apparatus (95, 96) connected to a receiver (18) comprising a sensor (19) sensitive to the initial radiation (1).

14. Lighting installation according to claim 13 **characterized in that** said receiver (18) is integrated in said at least one electrical apparatus (95).

## Patentansprüche

1. Beleuchtungseinrichtung mit
- mindestens einer LED-Lichtquelle (10) zur Aussendung von Weißlicht (9) durch Erzeugung einer Primärstrahlung (1) und einer durch Anregung mindestens einer Schicht (16) aus einem auf die genannte Primärstrahlung (1) ansprechenden Stoffes bewirkten Sekundärstrahlung (2),
- an die genannte, mindestens einfach vorhandene LED-Lichtquelle (11) angeschlossenen elektronischen Steuermitteln (11) zur Beleuchtungssteuerung sowie mit
- mindestens ersten, an die genannten Steuermittel angeschlossenen Kommunikationsmitteln (12),
**dadurch gekennzeichnet, dass** die elektronischen Steuermittel die Stromversorgung mindestens einer LED-Lichtquelle steuern, um ein Lichtsignal (3, 4, 31, 36) zur Modulation der genannten Primärstrahlung in Abhängigkeit von einem, durch die ersten Kommunikationsmittel (12) gelieferten Kommunikationssignal (13) auszusenden, welches Modulations-Lichtsignal dazu dient, durch auf die genannte Primärstrahlung (1) ansprechende Lichtsignal-Empfangsmittel (18) empfangen zu werden.

2. Beleuchtungseinrichtung nach Anspruch 1, **dadurch gekennzeichnet, dass** sie Empfangsmittel (18) mit einem auf die Primärstrahlung (1) ansprechenden Sensor (19) umfasst, der an Empfangssignal-Verarbeitungsmittel (20) angeschlossen ist.

3. Beleuchtungseinrichtung nach Anspruch 2, **dadurch gekennzeichnet, dass** die Empfangsmittel (18) optische Filtermittel (22) umfassen, um ein einer Primärstrahlung (1) entsprechendes Lichtsignal zu übertragen und eine Sekundärstrahlung (2) zu blockieren.

4. Beleuchtungseinrichtung nach einem der Ansprüche 2 oder 3, **dadurch gekennzeichnet, dass** die Empfangsmittel (18) elektronische Filtermittel (28) umfassen, um einen Gleichanteil eines Signals (21) zu dämpfen oder zu unterdrücken, das ein durch die Empfangsmittel empfangenes optisches Signal abbildet.

5. Beleuchtungseinrichtung nach irgendeinem der Ansprüche 1 bis 4, **dadurch gekennzeichnet, dass** die elektronischen Steuermittel (11) die Stromversorgung mindestens einer LED-Lichtquelle (10) steuern, um ein durch Überlagerung eines Gleichanteils (37, 73) mit einem, ein Kommunikationssignal (13) abbildenden Modulationssignal (36, 76) moduliertes Lichtsignal der genannten Primärstrahlung (1) auszusenden.

6. Beleuchtungseinrichtung nach Anspruch 5, **dadurch gekennzeichnet, dass** der Gleichanteil (73) von einem das Kommunikationssignal (13) abbildenden Wert abhängt.

7. Beleuchtungseinrichtung nach Anspruch 5 oder 6, **dadurch gekennzeichnet, dass** die Amplitude des Modulationssignals (73) von einem das Kommunikationssignal (13) abbildenden Wert abhängt.

8. Beleuchtungseinrichtung nach irgendeinem der Ansprüche 7 bis 9, **dadurch gekennzeichnet, dass** die elektronischen Steuermittel (11) Kompensationsmittel (72, 79, 88) zur Kompensation von Farbabweichungen des Beleuchtungssignals umfassen.

9. Beleuchtungseinrichtung nach irgendeinem der Ansprüche 1 bis 8, **dadurch gekennzeichnet, dass** sie mindestens eine LED-Lichtquelle (40) zur Aussendung von rotem Licht und/oder mindestens eine LED-Lichtquelle (42) zur Aussendung von blauem Licht umfasst, die jeweils durch die elektronischen Steuermittel (11) gesteuert werden.

10. Beleuchtungseinrichtung nach irgendeinem der Ansprüche 1 bis 9, **dadurch gekennzeichnet, dass** die elektronischen Steuermittel (11) Mittel (79, 98) zur Steuerung der Farbtemperatur der Lichtstrahlung umfassen.

11. Beleuchtungseinrichtung nach irgendeinem der Ansprüche 1 bis 10, **dadurch gekennzeichnet, dass** sie mindestens einen an die Steuermittel (11) angeschlossenen Lichtsensor (27) zur Regelung der Lichtstärke, des Farbwiedergabeindexes und/oder der Farbtemperatur einer zu Beleuchtungszwecken dienenden Lichtstrahlung umfasst.

12. Beleuchtungseinrichtung nach irgendeinem der Ansprüche 1 bis 11, **dadurch gekennzeichnet, dass** sie mindestens einen Messstromwandler (50, 51, 52) zur Beaufschlagung der Steuermittel mit einem Signal, das einen Strom (86, 89, 90) in mindestens einer Lichtquelle (11) abbildet, sowie zur Regelung eines an die genannte Lichtquelle zu liefernden Stroms umfasst.

13. Beleuchtungsanlage mit einer Stromversorgungsleitung (15) zur Einspeisung mindestens einer Beleuchtungseinrichtung, **dadurch gekennzeichnet, dass** die Anlage mindestens eine Beleuchtungseinrichtung (8) nach irgendeinem der Ansprüche 1 bis 12 und mindestens ein elektrisches Gerät (95, 96) umfasst, das an einen Empfänger (18) mit einem auf die Primärstrahlung (1) ansprechenden Sensor (19) angeschlossen ist.

14. Beleuchtungsanlage nach Anspruch 13, **dadurch gekennzeichnet, dass** der genannte Empfänger (18) in das genannte, mindestens einfach vorhandene elektrische Gerät integriert (95) ist.
